# EUROPEAN PATENT APPLICATION

(11) **EP 4 398 167 A1**
(43) Date of publication of application: **10.07.2024**
(21) Application number: 23218907.6
(22) Date of filing: 20.12.2023
(51) Int. Cl.: G06Q 10/08, G05B 19/418

(54) **SYSTEMS AND METHODS FOR OPTIMIZING OPERATION AT A MANUFACTURING ASSEMBLY LINE**

(30) Priority: 04.01.2023 US 202363478384 P
(71) Applicant: ATS Automation Tooling Systems Inc., Cambridge, Ontario N3H 4R7 (CA)
(72) Inventor: KNAP, Graham, N3H 4R7 Cambridge (CA); DOLGOVYKH, Anton, N3H 4R7 Cambridge (CA); KLEINIKKINK, Albert, N3H 4R7 Cambridge (CA); KLEINIKKINK, Stanley Wellington, N3H 4R7 Cambridge (CA)
(74) Representative: Murgitroyd & Company

(57) **Abstract**

Various systems and methods for optimizing operation at a manufacturing assembly line are disclosed. A method for optimizing operation at a manufacturing assembly line having a track on which a plurality of shuttles travel, the track including one or more stations at which a production task occurs and one or more track areas defined relative to the one or more stations, includes monitoring shuttle operation data associated with the plurality of shuttles on the track, and track sensor data associated with an operation state of the track; detecting an operation variation at the manufacturing assembly line based on the shuttle operation data; in response to detecting the operation variation, analyzing the shuttle operation data and the track sensor data to determine one or more degradation causes resulting in the operation variation; and generating an operation recommendation for resolving at least one degradation cause of the one or more degradation causes.

## Description

### Field

The described embodiments relate to systems and methods for optimizing operations at a manufacturing assembly line, and more specifically at a manufacturing assembly line having a track on which a plurality of shuttles travel.

### Background

Manufacturing processes can involve processing (e.g., assembling, fabricating, treating, refining, etc.) raw materials or parts to produce products. During a manufacturing process, a partially-finished product may be referred to as a workpiece. Manufacturing processes can involve assembly lines in which a workpiece is successively processed to produce a final product. The workpiece can be moved through the assembly line to various machines, or stations that sequentially perform various processing on the workpiece. Modern manufacturing assembly lines can involve a large number of highly configurable stations that can produce complex final products. As a result, it can be difficult to monitor the operation of a manufacturing assembly line and make any adjustments and/or repairs without affecting the overall production of the manufacturing assembly line.

Furthermore, it can be difficult to detect and repair issues occurring with the assembly line to optimize the manufacturing process. Also, when the assembly line involves multiple shuttles and multiple stations, it can become even more difficult to manage the overall operation of the manufacturing process.

### Summary

The various embodiments described herein generally relate to systems and methods for optimizing operations of a manufacturing assembly line.

In accordance with an example embodiment, there is provided a method for optimizing operation at a manufacturing assembly line having a track on which a plurality of shuttles travel, the track including one or more stations at which a production task occurs and one or more track areas defined relative to the one or more stations, the method including monitoring shuttle operation data associated with the plurality of shuttles on the track, and track sensor data associated with an operation state of the track; detecting an operation variation at the manufacturing assembly line based on the shuttle operation data; in response to detecting the operation variation, analyzing the shuttle operation data and the track sensor data to determine one or more degradation causes resulting in the operation variation, each degradation cause relating to one or more of at least one shuttle, the one or more stations and the one or more track areas; and generating an operation recommendation for resolving at least one degradation cause of the one or more degradation causes.

In some embodiments, detecting the operation variation at the manufacturing assembly line based on the shuttle operation data includes detecting a variation in a cycle time for one or more shuttles with respect to a station of the one or more stations.

In some embodiments, the one or more degradation causes includes at least one bottleneck at the track resulting from a delayed arrival of the one or more shuttles at the one or more stations; and generating the operation recommendation for resolving the at least one degradation cause includes identifying one or more idle track areas from the one or more track areas, the one or more idle track areas being associated with the one or more stations at which the one or more shuttles consistently arrive early; identifying one or more bottleneck track areas from the one or more track areas, the one or more bottleneck track areas being associated with the one or more stations at which the one or more shuttles are consistently delayed; and decreasing a velocity of the one or more shuttles when travelling within the one or more idle track areas and increasing the velocity of the one or more shuttles when travelling within the one or more bottleneck track areas.

In some embodiments, generating the operation recommendation for resolving the at least one degradation cause includes evaluating an urgency level of the one or more degradation causes for the manufacturing assembly line; and generating the operation recommendation for resolving the at least one degradation causes based on the urgency level.

In some embodiments, evaluating the urgency level of the one or more degradation causes includes predict an effect of the one or more degradation causes to the operation at the manufacturing assembly line at a future time; and assigning a higher urgency level to the one or more degradation causes associated with a greater effect to the operation at the manufacturing assembly line at the future time and a lower urgency level to the one or more degradation causes associated with a lower effect to the operation at the manufacturing assembly at the future time.

In some embodiments, analyzing the shuttle operation data and the track sensor data to determine the one or more degradation causes resulting in the operation variation includes detecting a number of an operation error associated with the one or more shuttles exceeds a maximum operation error threshold.

In some embodiments, analyzing the shuttle operation data and the track sensor data to determine the one or more degradation causes resulting in the operation variation includes detecting a number of an operation error associated with the one or more track areas exceeds a maximum operation error threshold.

In some embodiments, analyzing the shuttle operation data and the track sensor data to determine the one or more degradation causes resulting in the operation variation includes: detecting a number of an operation error associated with the one or more stations exceeds a maximum operation error threshold.

In some embodiments, detecting the operation variation at the manufacturing assembly line based on the shuttle operation data includes detecting a current draw when at least one shuttle arrives at a station is above an expected current threshold; in response to detecting the current draw is above the expected current threshold, determining the one or more degradation causes includes a misalignment between the at least one shuttle and the station; and generating the operation recommendation for resolving the at least one degradation cause includes automatically adapting a position offset between the at least one shuttle and the station.

In some embodiments, generating the operation recommendation for resolving the at least one degradation cause includes defining the operation recommendation to include adjusting two or more of the at least one shuttle, the one or more stations and the one or more track areas.

In some embodiments, the method includes generating one or more predictive models based on at least one of the shuttle operation data and track sensor data; detecting the operation variation at the manufacturing assembly line based on the shuttle operation data includes applying the one or more predictive models to predict the operation variation; and generating the operation recommendation for resolving the at least one degradation cause includes providing the operation recommendation for preventing the operation variation.

In accordance with an example embodiment, there is provided a system for optimizing operation of a manufacturing assembly line, the manufacturing assembly line including a track on which a plurality of shuttles travel, the track including one or more stations at which a production task occurs and one or more track areas defined relative to the one or more stations, the system including a processor configured to: monitor shuttle operation data associated with the plurality of shuttles on the track, and track sensor data associated with an operation state of the track; detect an operation variation at the manufacturing assembly line based on the shuttle operation data; in response to detecting the operation variation, analyze the shuttle operation data and the track sensor data to determine one or more degradation causes resulting in the operation variation, each degradation cause relating to one or more of at least one shuttle, the one or more stations and the one or more track areas; and generate an operation recommendation for resolving at least one degradation cause of the one or more degradation causes.

In some embodiments, the processor is configured to detect a variation in a cycle time for one or more shuttles with respect to a station of the one or more stations.

In some embodiments, the one or more degradation causes includes at least one bottleneck at the track resulting from a delayed arrival of the one or more shuttles at the one or more stations; and the processor is configured to identify one or more idle track areas from the one or more track areas, the one or more idle track areas being as sociated with the one or more stations at which the one or more shuttles consistently arrive early; identify one or more bottleneck track areas from the one or more track areas, the one or more bottleneck track areas being associated with the one or more stations at which the one or more shuttles are consistently delayed; and decrease a velocity of the one or more shuttles when travelling within the one or more idle track areas and increasing the velocity of the one or more shuttles when travelling within the one or more bottleneck track areas.

In some embodiments, the processor is configured to evaluate an urgency level of the one or more degradation causes for the manufacturing assembly line; and generate the operation recommendation for resolving the at least one degradation causes based on the urgency level.

In some embodiments, the processor is configured to predict an effect of the one or more degradation causes to the operation at the manufacturing assembly line at a future time; and assign a higher urgency level to the one or more degradation causes associated with a greater effect to the operation at the manufacturing assembly line at the future time and a lower urgency level to the one or more degradation causes associated with a lower effect to the operation at the manufacturing assembly at the future time.

In some embodiments, the processor is configured to detect a number of an operation error associated with the one or more shuttles exceeds a maximum operation error threshold.

In some embodiments, the processor is configured to detect a number of an operation error associated with the one or more track areas exceeds a maximum operation error threshold.

In some embodiments, the processor is configured to detect a number of an operation error associated with the one or more stations exceeds a maximum operation error threshold.

In some embodiments, the processor is configured to detect the operation variation at the manufacturing assembly line based on the shuttle operation data includes detecting a current draw when at least one shuttle arrives at a station is above an expected current threshold; in response to detecting the current draw is above the expected current threshold, determine the one or more degradation causes includes a misalignment between the at least one shuttle and the station; and generate the operation recommendation for resolving the at least one degradation cause includes automatically adapting a position offset between the at least one shuttle and the station.

In some embodiments, the processor is configured to define the operation recommendation to include adjusting two or more of the at least one shuttle, the one or more stations and the one or more track areas.

In some embodiments, the processor is configured to generate one or more predictive models based on at least one of the shuttle operation data and track sensor data; apply the one or more predictive models to predict the operation variation; and provide the operation recommendation for preventing the operation variation.

In accordance with an example embodiment, there is provided a method for automatically adjusting a maintenance schedule assigned to a manufacturing assembly line having a track on which a plurality of shuttles travel, the method including monitoring shuttle operation data associated with the plurality of shuttles on the track, and track sensor data associated with an operation state of the track and an environment in which the manufacturing assembly line operates; detecting a performance variation based at least on the shuttle operation data; evaluating the track sensor data to detect an environment condition affecting one or more of a movement of the plurality of shuttles on the track and a production task at the one or more stations; and generating a maintenance recommendation outside of the maintenance schedule based on the performance variation and the environment condition.

In some embodiments, detecting the performance variation based at least on the shuttle operation data includes detecting a number of an operation error exceeds a maximum operation error threshold, the operation error being associated with one or more of at least one shuttle of the plurality of shuttles, the track and the one or more stations; and determining a cause of the operation error; and generating the maintenance recommendation includes automatically generating a notification recommending a maintenance task for resolving the cause of the operation error outside of the maintenance schedule.

In some embodiments, detecting the performance variation based at least on the shuttle operation data includes determining a usage type for the manufacturing assembly line; and adapting a variation threshold for triggering the performance variation based on at least one of the usage type and the track sensor data.

In some embodiments, generating the maintenance recommendation includes determining the performance variation includes detecting a usage of the manufacturing assembly line is below an expected usage threshold; and adapting the maintenance schedule to delay one or more maintenance tasks.

In some embodiments, generating the maintenance recommendation includes determining the performance variation includes detecting a usage of the manufacturing assembly line exceeds an expected usage threshold; and adapting the maintenance schedule to advance one or more maintenance tasks.

In some embodiments, generating the maintenance recommendation includes identifying a replacement part required for resolving the performance variation; and automatically submitting an order for the replacement part via a network.

In some embodiments, the order for the replacement part is submitted without manual approval from an operator, and the method includes extending a warranty period assigned to a component for which the replacement part is intended.

In accordance with an example embodiment, there is provided a system for automatically adjusting a maintenance schedule assigned to a manufacturing assembly line having a track on which a plurality of shuttles travel, the system including a processor configured to monitor shuttle operation data associated with the plurality of shuttles on the track, and track sensor data associated with an operation state of the track and an environment in which the manufacturing assembly line operates; detect a performance variation based at least on the shuttle operation data; evaluate the track sensor data to detect an environment condition affecting one or more of a movement of the plurality of shuttles on the track and a production task at the one or more stations; and generate a maintenance recommendation outside of the maintenance schedule based on the performance variation and the environment condition.

In some embodiments, the processor is configured to detect a number of an operation error exceeds a maximum operation error threshold, the operation error being associated with one or more of at least one shuttle of the plurality of shuttles, the track and the one or more stations; determining a cause of the operation error; and generate a notification recommending a maintenance task for resolving the cause of the operation error outside of the maintenance schedule.

In some embodiments, the processor is configured to determine a usage type for the manufacturing assembly line; and adapt a variation threshold for triggering the performance variation based on at least one of the usage type and the track sensor data.

In some embodiments, the processor is configured to detect a usage of the manufacturing assembly line is below an expected usage threshold; and adapt the maintenance schedule to delay one or more maintenance tasks.

In some embodiments, the processor is configured to detect a usage of the manufacturing assembly line exceeds an expected usage threshold; and adapt the maintenance schedule to advance one or more maintenance tasks.

In some embodiments, the processor is configured to identify a replacement part required for resolving the performance variation; and automatically submit an order for the replacement part via a network.

In some embodiments, the order for the replacement part is submitted without manual approval from an operator, and the processor is configured to extend a warranty period assigned to a component for which the replacement part is intended.

### Brief Description of the Drawings

Several embodiments will be described in detail with reference to the drawings, in which:
FIG. 1 is a block diagram of an example manufacturing assembly line optimization system in communication with external components over a network, in accordance with an example embodiment;
FIG. 2 is a top perspective view of an example manufacturing assembly line, in accordance with an example embodiment;
FIG. 3 is a flowchart of an example method of optimizing operation at a manufacturing assembly line, in accordance with an example embodiment;
FIG. 4 is a schematic diagram of an example manufacturing assembly line, in accordance with an example embodiment;
FIG. 5 is a schematic diagram of the example manufacturing assembly line of FIG. 4 in accordance with another example embodiment;
FIG. 6 is a schematic diagram of the example manufacturing assembly line of FIG. 4 in accordance with another example embodiment;
FIG. 7 is a schematic diagram of the example manufacturing assembly line of FIG. 4 in accordance with another example embodiment; and
FIG. 8 is a flowchart of an example method of automatically adjusting a maintenance schedule assigned to a manufacturing assembly line, in accordance with an example embodiment.

The drawings, described below, are provided for purposes of illustration, and not of limitation, of the aspects and features of various examples of embodiments described herein. For simplicity and clarity of illustration, elements shown in the drawings have not necessarily been drawn to scale. The dimensions of some of the elements may be exaggerated relative to other elements for clarity. It will be appreciated that for simplicity and clarity of illustration, where considered appropriate, reference numerals may be repeated among the drawings to indicate corresponding or analogous elements or steps.

### Description of Example Embodiments

Modern manufacturing assembly lines can involve a large number of highly configurable machines that can produce complex final products. For example, manufacturing assembly lines configured to produce complex products such as medical devices, electronics, or automobiles, may involve more than hundreds, if not thousands, of processing steps. To increase the efficiency of the manufacturing process, manufacturing assembly lines may be organized into a number of subsections or stations, which may be referred to as cells. Each cell can include a collection of one or more related devices for processing a workpiece.

It may be difficult to predict the behavior a manufacturing assembly line, even if it is organized into one or more cells. Despite a simplified cellular arrangement, a manufacturing assembly line may nevertheless exhibit highly complex, interdependent, and convoluted properties. Traditionally, understanding the behavior of a manufacturing assembly line typically involves relying on the intuition or "gut-feel" of expert operators who have significant experience dealing with a particular manufacturing assembly line. However, this may be unreliable when changes to the manufacturing assembly line are implemented. Furthermore, no such expert operators may be available when implementing a new manufacturing assembly line.

Stations at the manufacturing assembly line can experience performance degradation over time. This performance degradation lowers the throughput of the manufacturing assembly line. Completing a root-cause analysis to address performance degradation can be complex as it may require one to analyze the entire system, time every station, and data may not be readily available. Furthermore, the performance can keep degrading without being diagnosed and because all stations on the assembly line can degrade over time, maintaining each station one-by-one rarely brings the performance back on track.

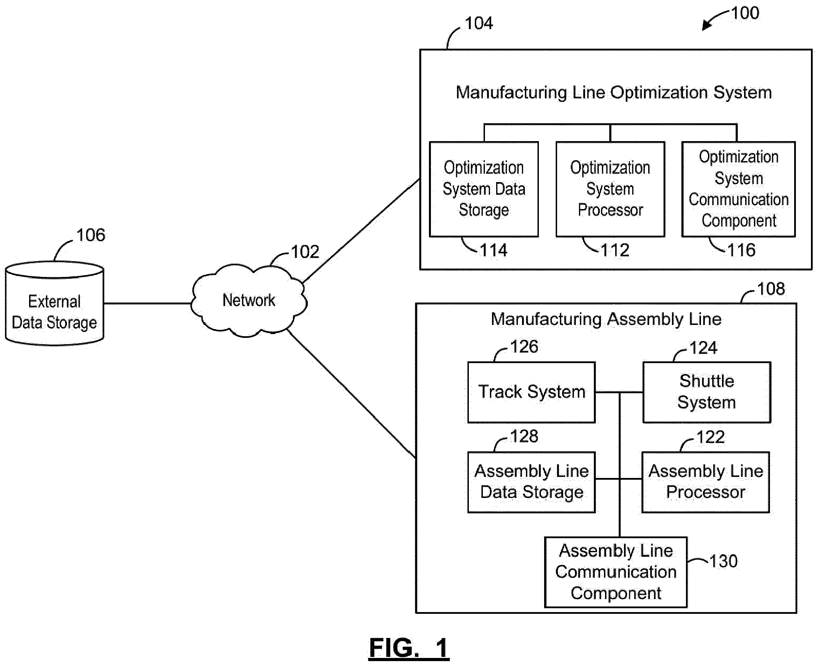

Reference is made to FIG. 1, which illustrates a block diagram 100 of a manufacturing line optimization system 104 in communication with a manufacturing assembly line 108 and an external data storage 106 via a network 102.

The manufacturing line optimization system 104 can include a optimization system processor 112, a optimization system data storage 114, and a communication component 116. It will be understood that the manufacturing line optimization system 104 may include one or more computer servers that may be distributed over a wide geographic area and connected via the network 102. It will be understood that in some embodiments, each of the optimization system processor 112, the optimization system data storage 114, and the optimization system communication component 116 may be combined into fewer number of components or may be separated into further components. Furthermore, the optimization system processor 112, the optimization system data storage 114, and the optimization system communication component 116 may be implemented in software or hardware, or a combination of software and hardware.

The manufacturing line optimization system 104 can include networked equipment, a software-as-a-service server (SaaS server) and/or other computing system (with at least a processor, a memory and a network interface) for receiving the notifications generated by the manufacturing assembly line 108. An example networked equipment can include an industrial machine, facilities equipment, sensor, or any other machine that can be connected to the network 102. The networked equipment can include a processor, such as a microcontroller, a memory that may include volatile and non-volatile elements, and at least one network interface. The networked equipment may include additional input or output devices, in some embodiments. Like the networked equipment, the SaaS server has a processor, volatile and non-volatile memory, at least one network interface, and may have various other input/output devices. In many cases, the SaaS server may be constructed from a server farm, which may be in geographically diverse locations. Such arrangements are sometimes referred to as "cloud" services. In general, the SaaS server provides one or more software applications, and may be accessed by one or more device from within the network 102 and occasionally from outside of network 102.

The optimization system processor 112 may be configured to control the operation of the manufacturing line optimization system 104. The optimization system processor 112 may be any suitable processor, controller or digital signal processor that can provide sufficient processing power depending on the configuration, purposes and requirements of the manufacturing line optimization system 104. In some embodiments, the optimization system processor 112 can include more than one processor with each processor being configured to perform different dedicated tasks.

The optimization system data storage 114 can include RAM, ROM, one or more hard drives, one or more flash drives or some other suitable data storage elements such as disk drives, etc. The optimization system data storage 114 may further include one or more databases (not shown) for storing information relating to the operation of the manufacturing assembly line 108, for example. Similarly, the external data storage 106 can store information related to the operation of the manufacturing assembly line 108 and/or the manufacturing line optimization system 104. The information stored in the external data storage 106 can be accessed by the manufacturing line optimization system 104 via the network 102. The information stored in the external data storage 106 can include, but is not limited to, data that may not be regularly accessed and/or back-up copies of data stored at the optimization system data storage 114.

The optimization system communication component 116 may be any interface that enables the manufacturing line optimization system 104 to communicate with other devices and systems. In some embodiments, the optimization system communication component 116 can include at least one of a serial port, a parallel port or a USB port. The optimization system communication component 116 may also include at least one of an Internet, Local Area Network (LAN), Ethernet, Firewire, modem or digital subscriber line connection. Various combinations of these elements may be incorporated within the optimization system communication component 116. For example, the optimization system communication component 116 may receive input from various input devices, such as a mouse, a keyboard, a touch screen, a thumbwheel, a track-pad, a track-ball, a card-reader, and the like depending on the requirements and implementation of the manufacturing line optimization system 104.

The manufacturing assembly line 108 can include a shuttle system 124,a track system 126, an assembly line processor 122, an assembly line data storage 128, and an assembly line communication component 130.

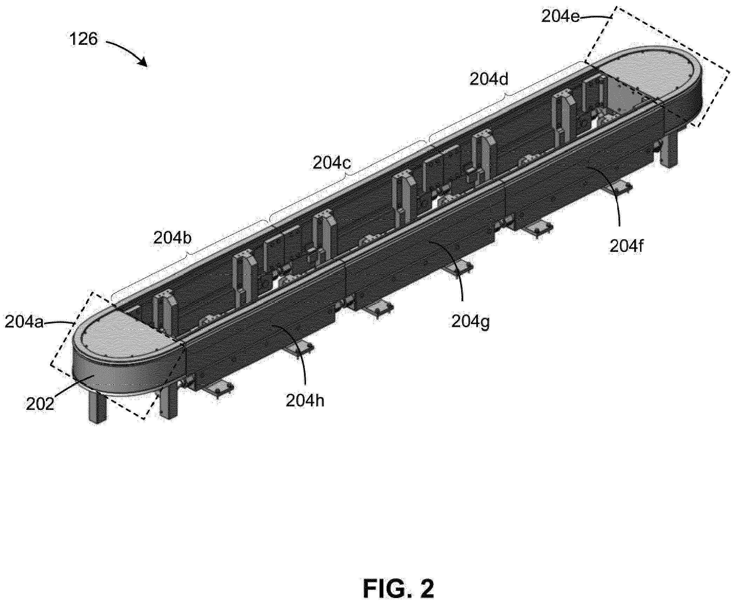

FIG. 2 shows an example track system 126. The track system 126 can include a track 202 on which a plurality of shuttles can travel. The track 202 can include one or more stations at which a production task occurs and one or more track areas 204 (e.g., 204a to 204g) defined relative to the one or more stations. The track system 126 can also include one or more track sensors located along the track 202 for collecting track sensor data. The track sensor data can relate to the state of the track 202 and/or operation condition of the track. For example, the track sensor data can include track idle time, error messages received from the track 202, alarms initiated by the track 202, and temperatures of the track 202 at various track areas 204 (e.g., 204a to 204g).

The track sensors can include, and are not limited to, one or more of encoders, position sensors, pressure sensors, temperature sensors, force sensors, vibration sensors, piezo sensors, fluid property sensors, humidity sensors, strain gauges, photo optic sensors, moisture sensors, gas sensors, hall effect sensors, and/or image sensors. Multiple sensors can be positioned along the track 202. For example, the track 202 can include a certain number of sensors for each distance along the track 202. For example, the track 202 can include a temperature sensors per meter of the track 202 so that the optimization system processor 112 can then collect the temperature data of the track 202 and generate a corresponding temperature map of the manufacturing assembly line 108. The track sensor data collected can be stored locally at the manufacturing assembly line 108 and/or transmitted via the network 102 to the manufacturing line optimization system 104.

The shuttle system 124 can include the shuttles that can travel along the track 202. The shuttle system 124 can include shuttle sensors located on the shuttles for collecting shuttle operation data. The shuttle operation data can relate to the state of the shuttles and/or operation condition of the shuttles. The shuttle operational data can include, but not limited to, shuttle arrival time, shuttle departure time, shuttle idle time, error messages received from the shuttle, alarms transmitted by the shuttle, and temperature data related to the shuttle including, but not limited to, wheel temperatures, shuttle body temperatures, etc. For example, encoders may be used to detect rotation angle or linear displacement at the shuttles (e.g., displacement of up to 1 micron resolution in some embodiments).

The shuttle sensors can include, and are not limited to, one or more of encoders, position sensors, pressure sensors, temperature sensors, force sensors, vibration sensors, piezo sensors, fluid property sensors, humidity sensors, strain gauges, photo optic sensors, moisture sensors, gas sensors, hall effect sensors, and/or image sensors. The manufacturing line optimization system 104 can also monitor a mileage of the shuttles. For instance, a passive motor may be used to monitor the distance travelled by the shuttle. The manufacturing line optimization system 104 can monitor brushes, different thresholds, temperature and voltage, tracking voltage/power, etc. to determine the usage of the motor. In some embodiments, the shuttle sensors can detect a following error at the shuttles and any other changes in the closed loop control of the shuttles.

In some embodiments, the track sensors can collect shuttle operation data as well. For example, when a shuttle travels along the track 202, the track sensors can detect the shuttle's departure time and arrival time. The shuttle operation data collected can be stored locally at the manufacturing assembly line 108 and/or transmitted via the network 102 to the manufacturing line optimization system 104.

The assembly line processor 122 may be any suitable processor, controller or digital signal processor that can provide sufficient processing power depending on the configuration, purposes and requirements of the manufacturing assembly line 108.

The assembly line data storage 128 can include RAM, ROM, one or more hard drives, one or more flash drives or some other suitable data storage elements such as disk drives, etc., for storing information relation to the operation of the manufacturing assembly line 108. For example, the data collected by the shuttle sensors and/or track sensors can be stored at the assembly line data storage 128, and then transmitted via the network 102 via the assembly line communication component 130. The assembly line communication component 130 may be any interface that enables the manufacturing assembly line 108 to communicate with other devices and systems.

In some embodiments, the manufacturing line optimization system 104 can be implemented at the manufacturing assembly line 108. For example, the manufacturing assembly line 108 can be integrated to include the manufacturing line optimization system 104.

The manufacturing line optimization system 104 can operate to optimize operation of the manufacturing assembly line 108 based on one or more of operating data and/or historical data associated with the manufacturing assembly line 108 and/or a similar type of manufacturing assembly line. For example, the manufacturing line optimization system 104 can determine from the operating data and the historical data the typical bottleneck areas and generate a recommendation for adapting the layout of the manufacturing assembly line 108 accordingly. In another example, the manufacturing line optimization system 104 can also determine from the operating data and the historical data which track areas 204 may require more track sensors. The manufacturing line optimization system 104 can determine that a track area 204 may require more track sensors due to more frequent usage, whereas another track area 204 may not be used as frequently and therefore requires fewer track sensors.

In some embodiments, the manufacturing line optimization system 104 can predict operation variations based on data models generated from the various operating data and/or historical data. The manufacturing line optimization system 104 can then generate the operation recommendation for resolving that operation variation even before it occurs to initiate a change and/or notification before the operation variation occurs.

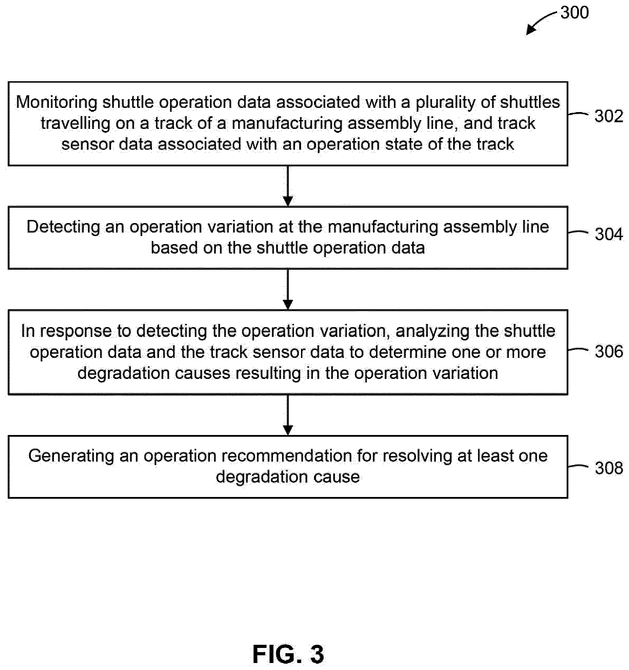

Reference will now be made to FIG. 3, which illustrates a flowchart 300 of an example method of optimizing operation of a manufacturing assembly line.

**At 302, the optimization system processor 112 monitors shuttle operation data associated with the plurality of shuttles travelling on the track 202, and track sensor data associated with an operation state of the track 202.**

As described, the shuttle operation data relates to the operating state of the shuttles travelling on the track 202 and the track sensor data relates to the operating state of the track 202.

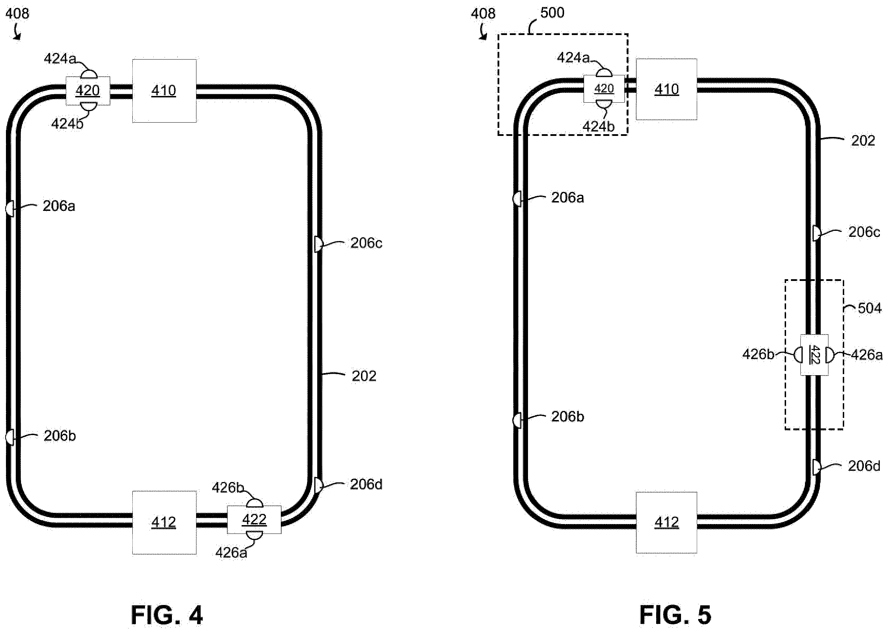

FIG. 4 shows a schematic diagram of an example manufacturing assembly line 408. The manufacturing assembly line 408 includes the track 202 with track sensors 206, namely 206a to 206d in this example, positioned along the track 202, and shuttles 420 and 422 travelling along the track 202. Each shuttle 420, 422 has also shuttle sensors 424a and 424b, and 426a and 424b, respectively. Only two shuttles 420, 422 are shown in this example for ease of exposition. It will be understood that many more shuttles 420, 422 may travel on the track 202 at any one time. The optimization system processor 112 can receive the shuttle operation data and the track sensor data from the track sensors 206 and shuttle sensors 424 and 426 via the network 102. It will also be understood that the sensors 206, 424, 426 shown in FIG. 4 are merely for illustrative purposes, and that more or fewer sensors 206, 424, 426 may be included into the manufacturing assembly line 408.

**At 304, the optimization system processor 112 detects an operation variation at the manufacturing assembly line 108 based on the shuttle operation data.**

The optimization system processor 112 can determine from the shuttle operation data how long a shuttle stays in place, at each station and at each tooling position. For example, the optimization system processor 112 can provide current data on cycle time at each station. In another example, the optimization system processor 112 can detect various different operational trends, such as travel in the wrong direction and/or sudden changes in the cycle-time of a single station, etc.

An operation variation can include deviation in the track operation and/or shuttle operation from the expected operation. Generally, the operation at the track 202 and the shuttles 420, 422 are known and programmed to a relatively set schedule. When the optimization system processor 112 determines a deviation between the expected operation, the optimization system processor 112 detects the operation variation at the manufacturing assembly line 108. As will be described, the deviation in operation may need to satisfy a predefined threshold before the optimization system processor 112 will identify that deviation in operation as the operation variation. For example, if the arrival time of the shuttle 420 is earlier than the exf108pected time on a regular basis at the station 410, the optimization system processor 112 can detect that as the operation variation. In another example, if the temperature of the track 202 is changing from an expected operating temperature beyond an acceptable threshold, the optimization system processor 112 can detect that as the operation variation. The optimization system processor 112 can detect, in some embodiments, that the operation variation relates to a variation in a cycle time for shuttles 420, 422 with respect to a station 410, 412, and or that the shuttle 420/422 was moved or repositioned during a tooling interaction.

The optimization system processor 112 can, in some embodiments, generate a notification when the operation variation is detected. The notification may be in the form of a warning, error message, ticket, and/or alarm. The optimization system processor 112 can, in some embodiments, generate an automatic machine adjustment when the operation variation is detected. The adjustment may be in the form of a transfer system change in programable parameter or a parameter change related to the tooling or station parameter.

In some embodiments, the shuttles 420, 422 may be stationary at certain track areas 204. The optimization system processor 112 can determine whether those track areas 204 are idle track areas or bottleneck track areas. The optimization system processor 112 can identify idle track areas from the track areas 204 by determining that those areas are where the shuttles 420, 422 consistently arrive early and can identify bottleneck track areas as the track areas 204 where shuttles 420, 422 are consistently delayed.

The schematic diagram in FIG. 5 shows an example idle track area 500 and an example bottleneck track area 504. In FIG. 5, the shuttle 420 arrived at the station 410 early and remains idle for a period of time. The optimization system processor 112 can determine from the sensors 424a, 424b that the shuttle 420 is idle (e.g., velocity and/or acceleration is decreased) for an extended period of time. The temperature detected at that track area 500 may also be reduced. From at least some of these shuttle operation data and track sensor data, the optimization system processor 112 can determine that the track area 500 is an idle track area. Similarly, the shuttle 422 is delayed at arriving at the track area 504. The optimization system processor 112 can determine from the shuttle operation data that the shuttle 422 is delayed in its expected arrival time, and identify the track area 504 as a bottleneck track area 504

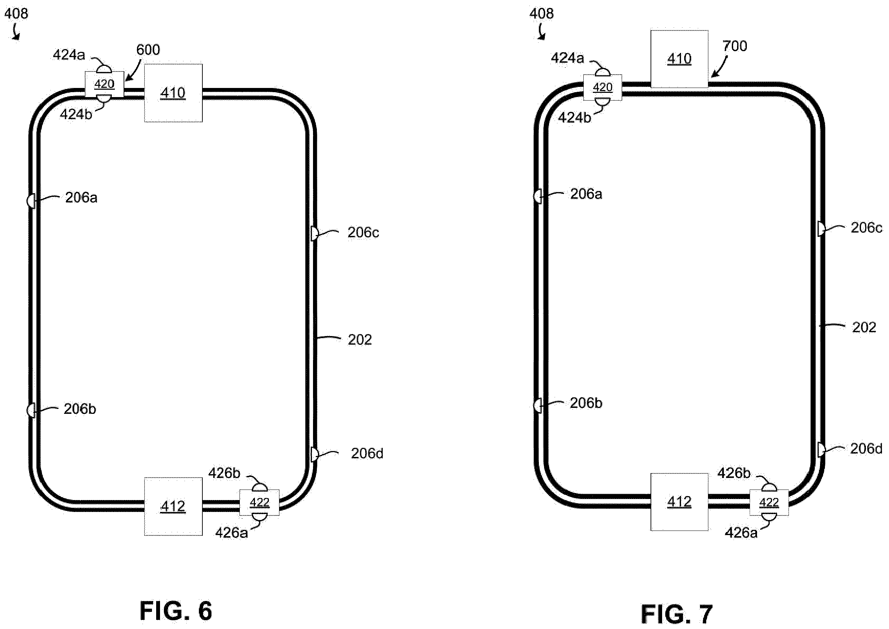

In some embodiments, the optimization system processor 112 can detect that the operation variation relates to a current draw that is above an expected current threshold when a shuttle 420 arrives at the station 410. The expected current threshold may vary in various embodiments, depending on the various factors, such as but not limited to, mass, acceleration, temperature, resistance, and/or efficiency at the manufacturing assembly line 108. FIG. 6 shows generally at 600 that the shuttle 420 is misaligned with the track 202. If the shuttle 420 is misaligned and the shuttle 420 is forced to move, an operational error may be generated by the manufacturing assembly line 108. Over time, the misalignment may become worse.

The shuttle sensors 424a, 424b can also detect a change in the shuttle settling times, a change in current draw, a change in force, etc., generally indicative of station misalignment. Station misalignment can result in increased positional and force data at a specific target, in a specific direction for all shuttles passing through that station. FIG. 7 shows generally at 700 that the station 410 is in misalignment with the track 202.

**At 306, in response to detecting the operation variation, the optimization system processor 112 analyzes the shuttle operation data and the track sensor data to determine degradation causes resulting in the operation variation.**

The degradation causes can relate to the shuttle 420, 422, the stations 410, 412 and/or the track 202. For example, the optimization system processor 112 can detect that a number of operation errors associated with the track areas 204, the shuttles 420, 422 and/or stations 410, 412 exceeds a maximum operation error threshold.

In some embodiments, as described with respect to FIG. 5, the degradation cause can include at least a bottleneck (e.g., 504) at the track 202 resulting from a delayed arrival of the shuttle 422 and/or an idle track area (e.g., 500) resulting from an early arrival of the shuttle 420. In another example, the optimization system processor 112 can determine that the degradation cause can relate to a misalignment between the shuttle 420 and the track 202 (see e.g., 600) when the current draw is above an expected current threshold when the shuttle 420 arrives at the station 410. Another example degradation cause can relate to a misalignment between the station 410 and the track 202. The optimization system processor 112 can determine the station misalignment when the positional and/or force data increase consistently at the area near the station 410 and/or in a specific direction towards the shuttle 420.

**At 308, the optimization system processor 112 generates an operation recommendation for resolving at least one degradation cause of the degradation causes.**

In some embodiments, the optimization system processor 112 can transmit the operation recommendation to the assembly line processor 122.

The optimization system processor 112 can define the operation recommendation to include adjusting two or more of the at least one shuttle 420, 422, the stations 410, 412 and the track areas 204 for resolving one or more degradation cause.

In some embodiments, the optimization system processor 112 can evaluate an urgency level of the degradation causes for the manufacturing assembly line 108 and generate the operation recommendation for resolving the at least one degradation causes based on the urgency level. The optimization system processor 112 can evaluate the urgency level by predicting an effect of the degradation cause to the overall operation at the manufacturing assembly line 108 at a future time. The optimization system processor 112 can then assign a higher urgency level to the degradation causes associated with a greater effect to the operation at the manufacturing assembly line 108 and a lower urgency level to the degradation causes associated with a lower effect to the operation at the manufacturing assembly line 108.

Continuing with FIG. 5, the optimization system processor 112 can generate the operation recommendation for the idle track area 500 by decreasing a velocity of the shuttle 420 when travelling within the idle track area 500 and/or the track area 204 proximal to the idle track area 500. The optimization system processor 112 can generate the operation recommendation for the bottleneck track area 504 to be to increase the velocity of the shuttle 422 when travelling within the bottleneck track area 504 and/or e track area 204 proximal to the bottleneck track area 504.

For the example shown in FIG. 6, the optimization system processor 112 can generate the operation recommendation to resolve the misalignment between the shuttle 420 and the track 202 by automatically adapting a position offset between the 420 and the track 202. The optimization system processor 112 can adjust the shuttle offset value to be the positional offset value to eliminate the side load misalignment at the shuttle 420. In some embodiments, the track 202 can include an encoder strip to assist with automatic alignment of the shuttle 420. In general, the shuttle 420 can be moved in any direction allowable by the track 202 to align it with the track 202 and/or the station 410. For station misalignment (as described with reference to FIG. 7), the optimization system processor 112 can generate the operation recommendation to resolve the misalignment by calibrating the shuttle target to the positional offset to eliminate the side load on the shuttle.

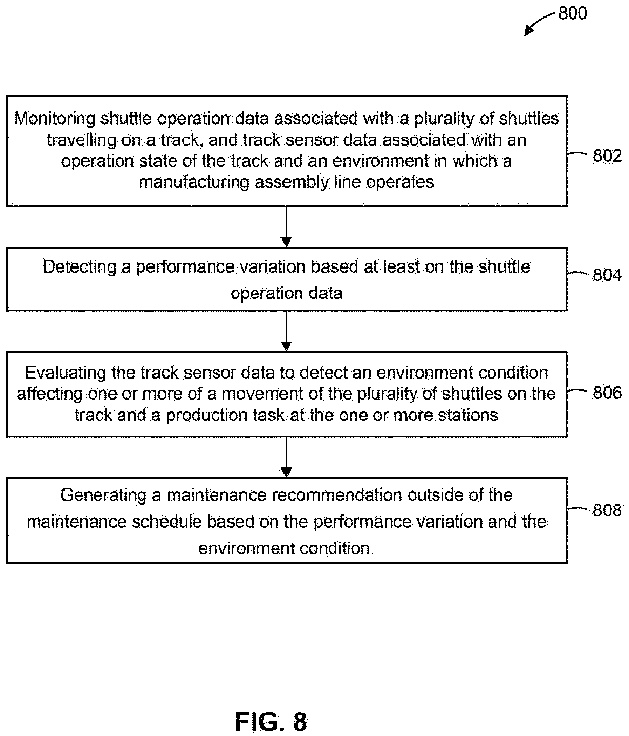

Reference will now be made to FIG. 8, which is a flowchart 800 of an example method for automatically adjusting a maintenance schedule assigned to the manufacturing assembly line 108.

**At 802, the optimization system processor 112 monitors the shuttle operation data associated with the shuttles 420, 422 on the track 202, and the track sensor data associated with an operation state of the track 202 and an environment in which the manufacturing assembly line 108 operates.**

As described, the shuttle operation data relates to the operating state of the shuttles 420, 422 travelling on the track 202 and the track sensor data relates to the operating state of the track 202. The optimization system processor 112 can also monitor the environment in which the manufacturing assembly line 108, such as ambient temperature, air condition, etc., to identify any environment condition that may affect the overall operation of the manufacturing assembly line 108. Generally, factors that may affect the maintenance requirements can include, but are not limited to, shuttle acceleration settings, cleanliness of the environment, number of magnets, center of gravity or cantilever load, shuttle mass, shuttle locking or shuttle engagement mechanisms and forces, and runtime temperature.

The optimization system processor 112 can use the shuttle operation data, the track sensor data and the environment data to determine if any maintenance to the manufacturing assembly line 108 is required. For example, the shuttles 420, 422 has various components (e.g., antistatic brushes, wheels, sensors, coils, etc.) that require maintenance. The shuttles 420, 422 also require lubrication periodically to ensure smooth operation.

**At 804, the optimization system processor 112 detects a performance variation based at least on the shuttle operation data.**

The optimization system processor 112 can detect a number of an operation error exceeds a maximum operation error threshold. In some embodiments, the optimization system processor 112 can determine the current and/or force required to move the shuttles 420, 422. The optimization system processor 112 can detect near-instantaneous, average and other changes in the current/force to generate a notification or system change. The operation error can be associated with one or more of at least one shuttle of the plurality of shuttles 420, 422, the track 202 and the one or more stations 410, 412. The optimization system processor 112 can also then determine a cause of the operation error.

The optimization system processor 112 can determine a usage type for the manufacturing assembly line 108. Maintenance thresholds may change from one track to the next, or from one assembly line to another. Depending on the usage type and the track sensor data, the optimization system processor 112 can adapt a variation threshold for triggering the performance variation. For example, the usage type may be associated with heavy use and the track sensor data can indicate heavy use. The optimization system processor 112 can then reduce the variation threshold to trigger the performance variation be detected more easily. Alternatively, the usage type may be associated with light use of the manufacturing assembly line 108 and the track sensor data can indicate light use as well. The optimization system processor 112 can then increase the variation threshold to trigger the performance variation be detected not as easily.

The optimization system processor 112 can also detect a usage of the manufacturing assembly line 108 is below or exceeds an expected usage threshold. The expected usage threshold can include, but not limited to, distance travelled, a number of visits by shuttles 420, 422 at the station 410, 412, etc.

In some embodiments, the operation variation can include a change in expected arrival time of the shuttle 420, 422, change in departure time of the shuttle 420, 422, and/or change in temperature at the track 202.

**At 806, the optimization system processor 112 evaluates the track sensor data to detect an environment condition affecting one or more of a movement of the shuttles 420, 422 on the track 202 and a production task at the stations 410, 420.**

The environment condition can relate to ambient temperature, air condition, etc. An operation of the shuttle 420, 422 can, for example, be affected by various factors, such as but not limited to, cleanliness of the environment and/or runtime temperature.

**At 808, the optimization system processor 112 generates a maintenance recommendation outside of the maintenance schedule based on the performance variation and the environment condition.**

For example, the optimization system processor 112 can determine several performance variations indicating a possible issue at the shuttle wheels, such as an increase in the temperature at the track 202, the settling time of the shuttle 420, 422 is increasing, and/or the shuttles 420, 422 are not traveling along the track 202 with the appropriate resistance. The optimization system processor 112 can then determine that preventative maintenance is required for the shuttles 420, 422 to avoid extended downtime. The optimization system processor 112 can then generate the maintenance recommendation to advance the preventative maintenance to address any possible issue at the station tooling, such as but not limited to, station alignment, shuttle wheel and/or complete preventative maintenance.

When the number of operation error exceeds the maximum operation error threshold, the optimization system processor 112 can automatically generate a notification recommending a maintenance task for resolving the cause of the operation error to take place outside of the maintenance schedule. This may occur when an operation error is being repeated to such a frequency that an earlier maintenance to correct the operation error is justified.

In some embodiments, the various thresholds disclosed herein can be varied with applications of various machine-learning. Algorithms, such as but not limited to regression techniques, abnormality detection algorithms, etc.

When the optimization system processor 112 determines that the usage of the manufacturing assembly line 108 is below the expected usage threshold, the optimization system processor 112 can adapt the maintenance schedule to delay one or more maintenance tasks. In contrast, when the optimization system processor 112 determines that the usage of the manufacturing assembly line 108 exceeds the expected usage threshold, the optimization system processor 112 can adapt the maintenance schedule to advance one or more maintenance tasks, as needed.

In some embodiments, the optimization system processor 112 can include in the maintenance recommendation an identification of a replacement part required for resolving the performance variation and automatically submit an order for the replacement part via the network 102. When the order for the replacement part is submitted without manual approval from an operator, the optimization system processor 112 can extend a warranty period assigned to a component for which the replacement part is intended.

It will be appreciated that numerous specific details are set forth in order to provide a thorough understanding of the example embodiments described herein. However, it will be understood by those of ordinary skill in the art that the embodiments described herein may be practiced without these specific details. In other instances, well-known methods, procedures and components have not been described in detail so as not to obscure the embodiments described herein. Furthermore, this description and the drawings are not to be considered as limiting the scope of the embodiments described herein in any way, but rather as merely describing the implementation of the various embodiments described herein.

The embodiments of the systems and methods described herein may be implemented in hardware or software, or a combination of both. These embodiments may be implemented in computer programs executing on programmable computers, each computer including at least one processor, a data storage system (including volatile memory or non-volatile memory or other data storage elements or a combination thereof), and at least one communication interface. For example, and without limitation, the programmable computers may be a server, network appliance, embedded device, computer expansion module, a personal computer, laptop, personal data assistant, cellular telephone, smart-phone device, tablet computer, a wireless device or any other processor capable of being configured to carry out the methods described herein.

In some embodiments, the communication interface may be a network communication interface. In embodiments in which elements are combined, the communication interface may be a software communication interface, such as those for inter-process communication (IPC). In still other embodiments, there may be a combination of communication interfaces implemented as hardware, software, and combination thereof.

Each program may be implemented in a high level procedural or object oriented programming and/or scripting language, or both, to communicate with a computer system. However, the programs may be implemented in assembly or machine language, if desired. In any case, the language may be a compiled or interpreted language. Each such computer program may be stored on a storage media or a device (e.g., ROM, magnetic disk, optical disc) readable by a general or special purpose programmable computer, for configuring and operating the computer when the storage media or device is read by the computer to perform the procedures described herein. Embodiments of the system may also be considered to be implemented as a non-transitory computer-readable storage medium, configured with a computer program, where the storage medium so configured causes a computer to operate in a specific and predefined manner to perform the functions described herein.

Furthermore, the system, processes and methods of the described embodiments are capable of being distributed in a computer program product comprising a computer readable medium that bears computer usable instructions for one or more processors. The medium may be provided in various forms, including one or more diskettes, compact disks, tapes, chips, wireline transmissions, satellite transmissions, internet transmission or downloadings, magnetic and electronic storage media, digital and analog signals, and the like. The computer useable instructions may also be in various forms, including compiled and non-compiled code.

Various embodiments have been described herein by way of example only. Various modification and variations may be made to these example embodiments without departing from the spirit and scope of the invention, which is limited only by the appended claims.

## Claims

1. A method for optimizing operation at a manufacturing assembly line having a track on which a plurality of shuttles travel, the track comprising one or more stations at which a production task occurs and one or more track areas defined relative to the one or more stations, the method comprising:
monitoring shuttle operation data associated with the plurality of shuttles on the track, and track sensor data associated with an operation state of the track;
detecting an operation variation at the manufacturing assembly line based on the shuttle operation data;
in response to detecting the operation variation, analyzing the shuttle operation data and the track sensor data to determine one or more degradation causes resulting in the operation variation, each degradation cause relating to one or more of at least one shuttle, the one or more stations and the one or more track areas; and
generating an operation recommendation for resolving at least one degradation cause of the one or more degradation causes.

2. The method of claim 1, wherein detecting the operation variation at the manufacturing assembly line based on the shuttle operation data comprises detecting a variation in a cycle time for one or more shuttles with respect to a station of the one or more stations; and
wherein, preferably, the one or more degradation causes comprises at least one bottleneck at the track resulting from a delayed arrival of the one or more shuttles at the one or more stations; and
generating the operation recommendation for resolving the at least one degradation cause comprises:
identifying one or more idle track areas from the one or more track areas, the one or more idle track areas being associated with the one or more stations at which the one or more shuttles consistently arrive early;
identifying one or more bottleneck track areas from the one or more track areas, the one or more bottleneck track areas being associated with the one or more stations at which the one or more shuttles are consistently delayed; and
decreasing a velocity of the one or more shuttles when travelling within the one or more idle track areas and increasing the velocity of the one or more shuttles when travelling within the one or more bottleneck track areas.

3. The method of any one of claims 1 to 2, wherein generating the operation recommendation for resolving the at least one degradation cause comprises:
evaluating an urgency level of the one or more degradation causes for the manufacturing assembly line; and
generating the operation recommendation for resolving the at least one degradation causes based on the urgency level; and
wherein, preferably, evaluating the urgency level of the one or more degradation causes comprises:
predict an effect of the one or more degradation causes to the operation at the manufacturing assembly line at a future time; and
assigning a higher urgency level to the one or more degradation causes associated with a greater effect to the operation at the manufacturing assembly line at the future time and a lower urgency level to the one or more degradation causes associated with a lower effect to the operation at the manufacturing assembly at the future time.

4. The method of any one of claims 1 to 3, wherein analyzing the shuttle operation data and the track sensor data to determine the one or more degradation causes resulting in the operation variation comprises:
detecting a number of an operation error associated with the one or more shuttles exceeds a maximum operation error threshold;
and/or wherein analyzing the shuttle operation data and the track sensor data to determine the one or more degradation causes resulting in the operation variation comprises:
detecting a number of an operation error associated with the one or more track areas exceeds a maximum operation error threshold;
and/or wherein analyzing the shuttle operation data and the track sensor data to determine the one or more degradation causes resulting in the operation variation comprises:
detecting a number of an operation error associated with the one or more stations exceeds a maximum operation error threshold;
and/or wherein:
detecting the operation variation at the manufacturing assembly line based on the shuttle operation data comprises detecting a current draw when at least one shuttle arrives at a station is above an expected current threshold;
in response to detecting the current draw is above the expected current threshold, determining the one or more degradation causes comprises a misalignment between the at least one shuttle and the station; and
generating the operation recommendation for resolving the at least one degradation cause comprises automatically adapting a position offset between the at least one shuttle and the station;
and/or wherein generating the operation recommendation for resolving the at least one degradation cause comprises:
defining the operation recommendation to include adjusting two or more of the at least one shuttle, the one or more stations and the one or more track areas.

5. The method of any one of claims 1 to 4, wherein: the method further comprises generating one or more predictive models based on at least one of the shuttle operation data and track sensor data;
detecting the operation variation at the manufacturing assembly line based on the shuttle operation data comprises applying the one or more predictive models to predict the operation variation; and
generating the operation recommendation for resolving the at least one degradation cause comprises providing the operation recommendation for preventing the operation variation.

6. A system for optimizing operation of a manufacturing assembly line, the manufacturing assembly line comprising a track on which a plurality of shuttles travel, the track comprising one or more stations at which a production task occurs and one or more track areas defined relative to the one or more stations, the system comprising a processor configured to:
monitor shuttle operation data associated with the plurality of shuttles on the track, and track sensor data associated with an operation state of the track;
detect an operation variation at the manufacturing assembly line based on the shuttle operation data;
in response to detecting the operation variation, analyze the shuttle operation data and the track sensor data to determine one or more degradation causes resulting in the operation variation, each degradation cause relating to one or more of at least one shuttle, the one or more stations and the one or more track areas; and
generate an operation recommendation for resolving at least one degradation cause of the one or more degradation causes.

7. The system of claim 6, wherein the processor is configured to detect a variation in a cycle time for one or more shuttles with respect to a station of the one or more stations; and
wherein, preferably, the one or more degradation causes comprises at least one bottleneck at the track resulting from a delayed arrival of the one or more shuttles at the one or more stations; and
the processor is further configured to
identify one or more idle track areas from the one or more track areas, the one or more idle track areas being as sociated with the one or more stations at which the one or more shuttles consistently arrive early;
identify one or more bottleneck track areas from the one or more track areas, the one or more bottleneck track areas being associated with the one or more stations at which the one or more shuttles are consistently delayed; and
decrease a velocity of the one or more shuttles when travelling within the one or more idle track areas and increasing the velocity of the one or more shuttles when travelling within the one or more bottleneck track areas.

8. The system of any one of claims 6 to 7, wherein the processor is further configured to:
evaluate an urgency level of the one or more degradation causes for the manufacturing assembly line; and
generate the operation recommendation for resolving the at least one degradation causes based on the urgency level.

9. The system of claim 8, wherein the processor is further configured to:
predict an effect of the one or more degradation causes to the operation at the manufacturing assembly line at a future time; and
assign a higher urgency level to the one or more degradation causes associated with a greater effect to the operation at the manufacturing assembly line at the future time and a lower urgency level to the one or more degradation causes associated with a lower effect to the operation at the manufacturing assembly at the future time.

10. The system of any one of claims 6 to 9, wherein the processor is configured to
detect a number of an operation error associated with the one or more shuttles exceeds a maximum operation error threshold.

11. The system of any one of claims 6 to 10, wherein the processor is configured to:
detect a number of an operation error associated with the one or more track areas exceeds a maximum operation error threshold.

12. The system of any one of claims 6 to 11, wherein the processor is configured to:
detect a number of an operation error associated with the one or more stations exceeds a maximum operation error threshold.

13. The system of any one of claims 6 to 12, wherein the processor is further configured to:
detect the operation variation at the manufacturing assembly line based on the shuttle operation data comprises detecting a current draw when at least one shuttle arrives at a station is above an expected current threshold;
in response to detecting the current draw is above the expected current threshold, determine the one or more degradation causes comprises a misalignment between the at least one shuttle and the station; and
generate the operation recommendation for resolving the at least one degradation cause comprises automatically adapting a position offset between the at least one shuttle and the station.

14. The system of any one of claims 6 to 13, wherein the processor is configured to:
define the operation recommendation to include adjusting two or more of the at least one shuttle, the one or more stations and the one or more track areas.

15. The system of any one of claims 6 to 14, wherein the processor is configured to:
generate one or more predictive models based on at least one of the shuttle operation data and track sensor data;
apply the one or more predictive models to predict the operation variation; and
provide the operation recommendation for preventing the operation variation.
